# EUROPÄISCHE PATENTSCHRIFT

(11) **EP 2 795 239 B1**
(45) Veröffentlichungstag und Bekanntmachung des Hinweises auf die Patenterteilung: **07.10.2020**
(21) Anmeldenummer: 12812906.1
(22) Anmeldetag: 12.12.2012
(51) Int. Cl.: G01B 5/012

(54) **KOMPAKTES 3D-TASTMESSGERÄT**
COMPACT 3D-SCANNER
APPAREIL 3D DE MESURE A PALPEUR

(30) Priorität: 21.12.2011 DE 102011056736
(43) Veröffentlichungstag der Anmeldung: 29.10.2014
(73) Patentinhaber: Tschorn GmbH, 73660 Urbach (DE)
(72) Erfinder: TSCHORN, Ralf, 73655 Plüderhausen (DE)
(74) Vertreter: Rüger Abel Patentanwälte PartGmbB
(86) Internationale Anmeldenummer: PCT/EP2012/075275
(87) Internationale Veröffentlichungsnummer: WO 2013/092354

(56) Entgegenhaltungen:
- DE-A1- 1 538 459
- DE-A1- 10 334 503
- DE-C2- 3 701 730
- DE-C2- 19 502 840
- GB-A- 804 534

## Beschreibung

Die vorliegende Erfindung betrifft allgemein ein 3D-Tastmessgerät und insbesondere ein 3D-Tastmessgerät, das sich insbesondere zum Antasten von Werkstücken in Richtung einer Messachse und quer zu der Messachse eignet.

Derartige 3D-Tastmessgeräte weisen im Allgemeinen einen aus dem Gehäuse herausragenden und eine Tastspitze tragenden Tastarm, der relativ zu dem Gehäuse in Richtung einer Messachse verschiebbar und um die Messachse allseitig schwenkbar ist, und eine Messeinrichtung zur Erfassung der Auslenkung des Tastarms auf. Üblicherweise werden hierzu herkömmliche mechanische Messuhren verwendet. Diese weisen meist eine Rundskala und eine analoge Anzeige auf, wobei die Längsbewegung eines Messbolzens mittels einer an einem inneren Ende des Messbolzens angebrachten Zahnstange und eines durch die Zahnstange angetriebenen Zahnradgetriebes auf einen drehbaren Zeiger der Messuhranzeige übertragen wird. Es werden auch Messuhren mit einer digitalen Anzeige eingesetzt.

Die 3D-Tastmessgeräte können z.B. zur Nullpunkteinstellung einer numerisch gesteuerten Werkzeugmaschine in Bezug auf das zu bearbeitende Werkstück verwendet werden. Hierzu wird das Tastmessgerät in eine Werkzeugmaschinenspindel eingespannt und mit seiner Tastspitze an eine Bezugsfläche des Werkstücks verfahren. Durch weiteres Zustellen der Werkzeugmaschinenspindel wird dann der Tastarm von dem Werkstück weggedrückt, bis der Zeiger der Messuhr seine Nullstellung erreicht.

DE 195 02 840 C2 beschreibt ein gattungsgemäßes Mehrkoordinaten-Tastmessgerät, das ein Gehäuse, einen in Richtung einer Messachse relativ zu dem Gehäuse verschiebbar und mittels eines Universalgelenks um einen auf der Messachse liegenden Schwenkpunkt allseitig schwenkbar an dem Gehäuse geführten, federnd in eine Ruhestellung vorgespannten Tasthebel mit einem aus dem Gehäuse herausragenden Tastarm und einem bezogen auf den Schwenkpunkt entgegengesetzt zu dem Tastarm wegragenden Koppelarm, ein in dem Gehäuse in Richtung der Messachse verschiebbar geführtes Kopplungsstück, das im Wesentlichen hülsenförmig ausgebildet ist, den Tasthebel umschließt und in dem Gehäuse verschiebbar gelagert und geführt ist, und eine die Position des Kupplungsstücks bezogen auf das Gehäuse erfassende Messeinrichtung aufweist. Der Tastarm trägt an seinem freien Ende eine Tastspitze und ist mit seinem anderen Ende in dem Koppelarm befestigt. Das andere, bezogen auf den Schwenkpunkt der Tastspitze ferne, freie Ende des Koppelarms weist eine in der Ruhestellung des Tasthebels zur Messachse rotationssymmetrische äußere Steuerfläche mit einer kreisabschnittförmigen Erzeugenden auf, deren Kreismittelpunkt exzentrisch zu der Rotationssymmetrieachse liegt. Diese äußere Steuerfläche wirkt mit einer inneren Steuerfläche zusammen, die an dem dem Schwenkpunkt axial fernen Ende des Kopplungsstücks in Form einer Kegelstumpffläche mit geradliniger Erzeugenden ausgebildet ist, derart zusammen, dass der Koppelarm sowohl beim Verschieben des Tastarms in Richtung der Messachse als auch beim Auslenken des Tastarms um den Schwenkpunkt das Kopplungsstück in Richtung der Messachse mitnimmt. Zur Erfassung der Verschiebung des Kopplungsstücks ist als Messeinrichtung eine mechanische Messuhr vorgesehen, die seitlich an dem Gehäuse angebracht und über einen quer zu der Messachse verlaufenden und in Richtung der Messachse beweglichen Kupplungsstift mit dem Kopplungsstück gekuppelt ist. Der Kupplungsstift ragt durch einen Langschlitz in einer Zwischenwand des Tastmessgerätes hindurch in die Messuhr hinein und wirkt auf einen Mess- und Anzeigemechanismus der Messuhr ein.

Im Betrieb wird das Tastmessgerät mittels eines Kegelschafts in einer Werkzeugmaschine oder einem Messgerät oder dgl. gehalten. Bei einer Stellbewegung der Tastspitze in Richtung der Messachse nimmt der Koppelarm das Kopplungsstück mit, welches seinerseits die mechanische Messuhr stellt. Bei einer Stellbewegung der Tastspitze quer zur Messachse schwenkt der Koppelarm um den durch das Kugelgelenk definierten Schwenkpunkt, wobei die dabei aneinander gleitenden Steuerflächen die Schwenkbewegung des Tasthebels in eine axiale Bewegung der Kopplungshülse umsetzen, die von der Messuhr erfasst und als Messwert für den radialen Abstand der Tastspitze von der Messachse herangezogen wird. Durch eine passende Gestaltung der zusammenwirkenden Steuerflächen kann erreicht werden, dass der radiale Abstand der Tastspitze von der Messachse in einem linear proportionalen 1:1-Verhältnis in den durch die Schwenkbewegung des Tasthebels bewirkten axialen Stellhub des Kupplungsstücks umgesetzt wird.

Das vorbekannte Tastmessgerät ist für die hier vorgesehenen Anwendungen geeignet. Allerdings weist es einen verhältnismäßig komplexen, kostspieligen Aufbau mit einer Vielzahl von kompliziert gestalteten und miteinander in Wirkverbindung stehenden einzelnen Bauteilen auf. Diese benötigen jeweils für sich relativ viel Platz und machen das Tastmessgerät verhältnismäßig sperrig. Bspw. wird durch die den Tasthebel rings um den Umfang umgebende Kopplungshülse das Bauvolumen stark vergrößert. Für die Kopplungshülse muss eine gesonderte Führung, zusätzlich zu den Führungen für den Tasthebel und die Mechanik der Messuhr vorgesehen werden. Die seitlich am Gehäuse des Tastmessgerätes angebrachte Messuhr, die radial noch weiter außen von der Kopplungshülse angeordnet und mit dieser über den quer zur Messachse verlaufenden Kupplungsstift gekuppelt ist, vergrößert das Bauvolumen und die Störkontur des Tastmessgerätes umso mehr.

Aus der DE 37 01 730 C2 ist ein ähnliches Mehrkoordinaten-Tastmessgerät mit einem in eine Werkzeugspindel einspannbaren Gehäuse, über das ein Tastarm mit einer Tastkugel am freien Ende herausragt, der in dem Gehäuse axial verschiebbar und bis zu einem vorbestimmten Maximalwinkel allseits schwenkbar gelagert ist und dessen Auslenkung mittels eines Umsetzsystems in eine lineare Bewegung eines Schiebers umsetzbar ist, der in dem Gehäuse zu der Messachse zentrisch angeordnet und gegen die Kraft einer Rückstellfeder verschiebbar geführt ist und an dem der Tastarm mit dem inneren Ende allseits schwenkbar abgestützt ist. Der Schieber trägt an seinem zu der Tastkugel fernen Ende einen Querarm, der durch einen Axialschlitz in dem Gehäuse des Tastmessgerätes hindurch nach außen ragt und mit einem Betätigungsglied einer Messuhr verbunden ist, die seitlich außen an dem Gehäuse des Tastmessgerätes befestigt ist. Das Betätigungsglied kann der aus dem Gehäuse der Messuhr herausgeführte Messbolzen der mechanischen Messuhr sein.

Dieser Messtasteraufbau weist ebenfalls eine hohe Bauteileanzahl und ein relativ großes Bauvolumen, insbesondere in der Richtung quer zur Messachse auf.

DE 103 34 503 A1 beschreibt ein 3D-Tastmessgerät mit einem eine Tastspitze tragenden Tastarm, der relativ zu einem Gehäuse längs einer Messachse verschiebbar und mittels eines ersten Universalgelenks um die Messachse allseitig schwenkbar ist, einem Übertragungssystem, das eine Auslenkung der Tastspitze auf einen in axialer Richtung in dem Gehäuse verschiebbar gelagerten Schieber überträgt, und einer Anzeigeeinrichtung zur Anzeige einer die Auslenkung der Tastspitze kennzeichnenden Größe. Das Übertragungssystem enthält einen über das erste Universalgelenk allseitig schwenkbar gehäuseseitig abgestützten Tasthebel, der an einem Ende mit dem Tastarm verbunden ist und der mit seinem anderen Ende über ein zweites Universalgelenk mit dem Schieber verbunden ist, der mit einer der Anzeigereinrichtung zugeordneten elektronischen und/oder mechanischen Betätigungseinrichtung zusammenwirkt.

GB 804 534 A beschreibt eine Messeinrichtung in Form einer Messuhr, die einen Messbolzen, der in Richtung einer Längsachse der Messuhr verschiebbar ist, und eine mit dem Messbolzen gekoppelte Zahnstangen-Ritzel-Kombination zur Übertragung der Längsbewegung des Messbolzens in eine Drehbewegung eines drehbaren Zeigers der Messuhrenanzeige aufweist. Die Zahnstange, ist durch eine Verzahnung gebildet, die an einem auf dem Messbolzen verschiebbar gelagerten Betätigungselement geformt ist, und kämmt mit einem Zahnstangenritzel, das mit einem Zeiger der Messuhr gekoppelt ist.

JP 07-043 101 A beschreibt einen Taster mit einem Gehäuse, einem schwenkbar und verschiebbar gelagerten Tastarm, einem mit dem Tastarm verbundenen Tasthebel, wobei der Tasthebel eine scheibenförmige Basis trägt, die mit einem scheibenförmigen Ende eines verschiebbar gelagerten zylindrischen Koppelelementes derart gekoppelt ist, dass eine Schwenkbewegung des Tasthebels mit dem Tastarm in eine Verschiebung des Koppelelementes umgesetzt wird. Das Koppelelement ist mit einer in dem Gehäuse angeordneten Messuhr gekoppelt, wobei ein Messbolzen der Messuhr konzentrisch zu der Messachse, mit dem Koppelelement fluchtend ausgerichtet angeordnet ist und mit dem Koppelelement lose in Berührung steht.

DE 1 538 459 A beschreibt einen elektrischen Taster für Steuerungsfolgen mit einem an einem Kardangelenk auslenkbar angebrachten Schaft für einen Fühlstiftkopf, wobei der Schaft über ein Universalgelenk auf ein in Längsrichtung verschiebbares Gleitstück einwirkt, das über einen Bund eine Gruppe von um dieses herum kranzförmig konzentrisch angeordneten Kontakten betätigt. An den Bund schließt sich ein Stiel des Tasters an, wobei eine Feder den Stiel mit dem Schaft nach außen in Richtung auf den Fühlstiftkopf vorspannt. An dem zu dem Fühlstiftkopf entgegengesetzten Ende des Gehäuses des Tasters ist eine externe Messuhr angebracht, deren Messbolzen in das Gehäuse des Tasters hineinragt, konzentrisch zu der Mess- bzw. Längsachse des Tasters verläuft und sich gegen den Stiel des Tasters abstützt, um ein Ablesen des Auslenkungswerts der Kontakte zu ermöglichen.

Ausgehend hiervon ist es eine Aufgabe der vorliegenden Erfindung, die vorstehend erwähnten Nachteile und Unzulänglichkeiten zu beseitigen oder zumindest zu reduzieren und die Komplexität des Aufbaus eines Tastmessgerätes der eingangs erwähnten Art zu verringern. Insbesondere ist es eine Aufgabe der vorliegenden Erfindung, ein Mehrkoordinaten-Tastmessgerät mit einer reduzierten Bauteileanzahl und einem verringerten Bauvolumen zu schaffen.

Diese Aufgabe wird gemäß der Erfindung durch das 3D-Tastmessgerät mit den Merkmalen des Patentanspruchs 1 gelöst.

Das erfindungsgemäße 3D-Tastmessgerät, insbesondere zum Antasten von Werkstücken in Werkzeugmaschinen, z.B. zur Nullpunkteinstellung einer numerisch gesteuerten Werkzeugmaschine oder für Positionieraufgaben, weist ein vorzugsweise längliches Gehäuse, das eine Längsrichtung definiert, einen aus dem Gehäuse herausragenden und eine Tastspitze tragenden Tastarm, der relativ zu dem Gehäuse in Richtung einer in der Längsrichtung verlaufenden Messachse verschiebbar und mittels eines ersten Universalgelenks um die Messachse allseitig schwenkbar ist, einen mit dem Tastarm verbundenen Tasthebel, der das erste Universalgelenk bildet, und eine Messeinrichtung zur Erfassung einer die Verschiebung und/oder Verschwenkung des Tastarms kennzeichnenden Größe auf. Der Tasthebel weist ein dem Tastarm zugewandtes, mit diesem fest verbundenes Ende, an dem ein Gelenkkopf ausgebildet ist, der eine äußere Steuerfläche aufweist, die an einer inneren Steuerfläche des Gehäuses drehbar abgestützt ist, um das erste Universalgelenk zur Verschwenkung des Tastarms zu bilden, und ein von dem Tastarm abgewandtes Ende auf, an dem eine weitere Steuerfläche für ein zweites Universalgelenk vorgesehen ist. Die Messeinrichtung weist eine längliche Zahnstange eines Zahnradgetriebes der Messeinrichtung auf, die längs der Messachse ausgerichtet und verschiebbar gelagert ist und die über das zweite Universalgelenk mit dem Tasthebel wirksam gekoppelt ist. Die Zahnstange trägt ein mit ihr gemeinsam verschiebbares Koppelelement, das ein von der Zahnstange gesondertes Bauteil ist, das an einem Stirnende der Zahnstange lösbar angebracht ist, oder das an der Zahnstange integral ausgebildet ist. Das Koppelelement weist eine mit der weiteren Steuerfläche zusammenwirkende Steuerfläche des zweiten Universalgelenks auf, um den Tasthebel mit der Zahnstange zu koppeln. Der Tastarm, der Tasthebel und die Zahnstange mit dem Koppelelement sind im Ruhezustand zu der Messachse zentrisch angeordnet.

Gemäß der Erfinng sind also sowohl der Tastarm, der Tasthebel und die Zahnstange der Messeinrichtung bzw. Messuhr mit dem an ihr angebrachten oder angeformten Koppelelement im Ruhezustand, also im nicht ausgelenkten Ausgangszustand, alle in der Messachse zentrisch, also mit ihrer Längsausrichtung längs der Messachse hintereinander angeordnet. Bei Nichtberücksichtigung einer Verzahnung der Zahnstange sind sie auch zu der Messachse rotationssymmetrisch ausgebildet. Da die Messachse mit der Längsachse bzw. "Quasisymmetrieachse" des Gehäuses zusammenfällt, ermöglicht die erfindungsgemäße zentrische Anordnung eine äußerst schlanke Form des Gehäuses und äußerst geringe Querabmessungen des Messtasters. Neben einem reduzierten Bauvolumen sind auch der Aufbau und die Funktionsweise des Messtasters stark vereinfacht und die Bauteileanzahl reduziert. Dies kommt auch einer Funktionssicherheit und Standzeit des Messtasters zugute. Erreicht wird dies vor allem durch eine Verlagerung der Zahnstange der Messuhr in die Messachse hinein, so dass kein axialer Versatz zwischen der Zahnstange und der Messachse vorliegt. Die Messuhr ist tief in dem Gehäuse, nah an der Messachse angeordnet. Der Messtaster ist frei von Querverbindungselementen, wie sie bei herkömmlichen Messtastern zur Ankopplung an die Zahnstange der Messuhr verwendet werden.

In einer bevorzugten Ausführungsform der Erfindung ist das Gehäuse des Tastmessgerätes mehrteilig ausgebildet und weist wenigstens einen ersten Gehäuseabschnitt, der die Messeinrichtung und eine Anzeigeeinrichtung zur Anzeige der durch die Messeinrichtung erfassten Größen aufnimmt, einen Gehäusedeckel, der an einem vorderen, der Tastspitze benachbarten Endbereich des Gehäuses vorzugsweise lösbar, insbesondere durch Anschrauben, befestigt ist, und einen zwischen dem ersten Gehäuseabschnitt und dem Gehäusedeckel angeordneten zweiten Gehäuseabschnitt auf, der eine Führungshülse zur längsverschiebbaren Führung des Tasthebels entlang der Messachse aufnimmt. Der erste und der zweite Gehäuseabschnitt sind vorzugsweise durch gesonderte Gehäuseteile, die miteinander verbunden, insbesondere verschraubt sind, gebildet. Sie können prinzipiell aber auch einstückig miteinander ausgebildet sein. Alternativ könnte auch die Führungshülse einstückig mit dem zweiten Gehäuseabschnitt ausgebildet sein.

Die Führungshülse ist zur Führung des Tasthebels bei seiner Längsverschiebung entlang der Messachse vorgesehen. Sie weist hierzu eine zylindrische Innenfläche auf, die eine Außenfläche insbesondere an dem Gelenkkopf des Tasthebels spielarm aufnimmt und führt.

In einer vorteilhaften Weiterbildung weist die Führungshülse eine Verengung auf, die in der Innenfläche der Führungshülse im Abstand zu einer der Tastspitze zugewandten Stirnfläche der Führungshülse ausgebildet ist und die einen Endanschlag zur Begrenzung der axialen Bewegung des Tasthebels in der Führungshülse bildet. Somit schützt die zylindrische Innenfläche der Führungshülse die Komponenten des Tastmessgerätes, insbesondere die Messeinrichtung, als seitlicher Anschlag bei Querstößen, während die Verengung als axialer Anschlag insbesondere vor Überlastung bei axialen Stößen schützt.

In einer bevorzugten Ausführungsform der Erfindung ist die innere Steuerfläche des ersten Universalgelenks an dem Gehäusedeckel ausgebildet. Dies erleichtert den Zusammenbau des Messtasters. Die innere Steuerfläche könnte aber auch an anderen Gehäuseabschnitten oder -teilen oder auch an einem in dem Gehäuse befestigten gesonderten Element vorgesehen sein.

Unabhängig von der Positionierung der inneren Steuerfläche des ersten Universalgelenks weist diese vorzugsweise eine um die Messachse herum rotationssymmetrische kegelstumpfförmige Gestalt mit geradliniger Erzeugenden auf. Die damit zusammenwirkende äußere Steuerfläche des ersten Universalgelenks kann dann vorzugsweise eine zur Messachse rotationssymmetrische konvexe Gestalt mit einer kreisabschnittförmigen Erzeugenden aufweisen. Der Gelenkkopf des Tasthebels ist also wenigstens bereichsweise kugelig ausgebildet. Dadurch ist ein einfach ausgebildetes, zuverlässiges Universalgelenk geschaffen, das eine hohe Genauigkeit bei der Umsetzung einer Schwenkbewegung des Tastarms in eine Linearbewegung der Zahnstange und eine präzise Erfassung der Tastarmauslenkung ermöglicht.

In einer besonders bevorzugten Ausführungsform bildet der Gehäusedeckel einen Teil einer auswechselbaren Baueinheit, die den Tastarm, den Tasthebel und die Führungshülse zur längsverschiebbaren Führung des Tasthebels entlang der Messachse aufweist. Die vormontierte Baueinheit ermöglicht einen schnellen und leichten Austausch und eine schnelle Wiedernutzung des Tastmessgerätes, wenn der Tastarm bspw. durch einen Aufprall gegen ein Hindernis beschädigt wird.

Vorzugsweise ist ferner der Tastarm selbst an dem Tasthebel, insbesondere an dem den Gelenkkopf des ersten Universalgelenks aufweisenden Ende auswechselbar gehalten, z.B. angeschraubt. In einer bevorzugten Ausführungsform verbindet eine Madenschraube bspw. den Gelenkkopf des Tasthebels mit dem inneren Ende des Tastarms. Der Tastarm kann dann bei Beschädigung, Abnutzung etc. schnell und leicht ausgetauscht werden. Prinzipiell kann der Tastarm aber auch einstückig mit dem Tasthebel ausgebildet sein.

Als weiterer Überlastungsschutz gegen unzulässige Stöße, insbesondere Querstöße, kann der Tastarm an einer Stelle in der Nähe des Tasthebels eine radiale Einschnürung aufweisen, die bei einer vorbestimmten Überbelastung einen vorgegebenen Bruch des Tastarms an dieser Stelle zur Folge hat. Andere Komponenten des Tastmessgerätes können dadurch von schädlichen Auswirkungen der Stöße verschont bleiben.

In einer bevorzugten Ausführungsform der Erfindung weist der Tasthebel einen Gelenkkopf auf, der einen die äußere Steuerfläche definierenden, wenigstens abschnittweise kugeligen Bereich, der sich um eine zu der Messachse senkrechte Achse über einen Winkel von etwas mehr als 180° erstreckt, und einen sich im Anschluss an den kugeligen Bereich erstreckenden, verjüngenden weiteren Bereich aufweist. Der Durchmesser des sich verjüngenden Bereiches nimmt in Richtung von dem kugeligen Bereich weg zu dem von dem Tastarm abgewandten Ende hin kontinuierlich ab. Der sich verjüngende Bereich kann bspw. zur Messachse rotationssymmetrisch und kegelstumpfförmig mit einer geradlinigen Erzeugenden ausgebildet sein. Der Gelenkkopf hat dann an dem Übergang von dem kugeligen Bereich zu dem sich verjüngenden Bereich den größten Durchmesser und eine äußert kleine Kontaktstelle, mit der er mit der Innenseite der Führungshülse in Berührung steht. Dies ergibt im Wesentlichen eine Punktlagerung und -führung des Gelenkkopfs in der Führungshülse, die gute Gleiteigenschaften des Tasthebels in der Führungshülse bei geringer Reibung sicherstellen.

In einer bevorzugten Ausführungsform der Erfindung weist der Tasthebel ferner in seiner zu dem kugeligen Gelenkkopf entgegengesetzten Stirnfläche eine um die Messachse herum rotationssymmetrische, sich zu der Zahnstange hin erweiternde Konusfläche mit einer geradlinigen oder leicht gekrümmten Erzeugenden auf, die die innere Steuerfläche des zweiten Universalgelenks bildet. Diese innere Steuerfläche wirkt dann mit einer vorzugsweise kugeligen äußeren Steuerfläche des zweiten Universalgelenks zusammen, um eine Verschwenkung des Tasthebels in eine axiale Verschiebung der Zahnstange umzusetzen.

Für diese Umsetzung der Bewegungen ist das Koppelelement vorgesehen, das den Tasthebel mit der Zahnstange koppelt. Der Tasthebel wirkt unmittelbar auf das Koppelelement ein, und das Koppelelement wirkt axial auf die Zahnstange ein. Das Koppelelement kann ein kugeliges Ende aufweisen, dass die äußere Steuerfläche des zweiten Universalgelenks definiert und an dem sich bspw. die stirnseitige Konusfläche des Kugelhebels drehbar abstützt. Das Koppelelement ist ebenfalls bauraumsparend, in Ruhestellung zentrisch zu der Messachse angeordnet.

Das Koppelelement kann in einer Ausführungsform ein von der Zahnstange gesondert hergestelltes Bauteil sein, das an einem Stirnende der Zahnstange lösbar angebracht, vorzugsweise angeschraubt wird. Dies ermöglicht es, herkömmliche Messuhren zu verwenden, wobei dann an der Zahnstange (oder einem mit dieser verbundenen Messbolzen) nur ein Außengewinde oder dgl. zur Aufnahme des Koppelelementes vorzusehen ist.

Alternativ kann das Koppelelement in einer anderen Ausführungsform auch an der Zahnstange integral, in einem Stück ausgebildet sein. Hierzu ist die bspw. kugelige äußere Steuerfläche des zweiten Universalgelenks unmittelbar an einem Stirnende der Zahnstange (oder eines damit verbundenen Messbolzens) anzuformen.

Als Messeinrichtung zur Erfassung der Längs- und/oder Querauslenkung des Tastarms kennzeichnenden Größe kann eine herkömmliche mechanische Messuhr verwendet werden, die ein mechanisches System zur Übertragung des geradlinigen Wegs der Zahnstange z.B. auf einen kreisförmigen Weg eines Zeigers auf einem Ziffernblatt einer Anzeige oder auch zur Umsetzung in eine digitale Ausgabe auf eine Ziffernanzeige aufweist.

In einer bevorzugten Ausführungsform weist die Messuhr ein Zahnradgetriebe mit einem Zahnstangenritzel, das mit der Zahnstange kämmt, um die geradlinige Bewegung der Zahnstange in eine kreisförmige Bewegung des Zahnstangenritzels zu wandeln, und ein Übertragungsräderwerk auf, das die kurze Drehung des Zahnstangenritzels in eine lange Drehbewegung bspw. eines Zeigers der Anzeigeeinrichtung wandelt. Es können weitere Zahnräder für weitere Übersetzungsstufen vorgesehen sein.

Die Zahnstange ist vorzugsweise durch Gleitlager längs der Messachse gleitend geführt. Um eine Beschädigung der Zahnstange und der Messuhr bei unzulässigen axialen Belastungen zu vermeiden, ist der durch das zweite Universalgelenk vorgegebene maximale axialen Verschiebeweg kleiner als die maximale Hubweite der Zahnstange, die bspw. durch Messbereichsgrenze der Messeinrichtung bestimmt ist oder diese bestimmt.

Im Übrigen weist das erfindungsgemäße Tastmessgerät noch weitere Komponenten, wie bspw. Mittel zur Verhinderung einer Verdrehung des Tasthebels und der Zahnstange um die Messachse, eine Rückstellfeder, die den Tasthebel und Tastarm in die Ruhestellung vorspannt, einen Einspannschaft zum Einspannen in eine Werkzeugmaschinenspindel an dem von der Tastspitze abgewandten Ende des Gehäuses und vorzugsweise eine Einrichtung zur Justierung und Zentrierung des Einspannschaftes in Bezug auf die Messachse auf.

Durch die zentrische Anordnung der Hauptkomponenten des erfindungsgemäßen 3D-Tastmessgerätes wird ein äußerst kompakter Mehrkoordinaten-Messtaster erhalten, der einen einfachen, übersichtlichen, robusten Aufbau aufweist und eine einfache Handhabung und lange Nutzungslebensdauer ermöglicht.

Weitere vorteilhafte Einzelheiten der Erfindung ergeben sich aus Unteransprüchen, der Zeichnung sowie der zugehörigen Beschreibung. In der Zeichnung ist lediglich zu Veranschaulichungszwecken und nicht im Sinne irgendeiner Beschränkung ein Ausführungsbeispiel des Gegenstandes der Erfindung dargestellt. Es zeigen:
Fig. 1 eine Draufsicht auf eine Ausführungsform eines 3D-Tastmessgerätes gemäß der Erfindung, in vereinfachter Darstellung;
Fig. 2 eine Längsschnittansicht des 3D-Tastmessgerätes nach Fig. 1, geschnitten entlang der Linie A-A in Fig. 1;
Fig. 3 eine Längsschnittansicht des 3D-Tastmessgerätes nach Fig. 1, geschnitten in einer zu der Schnittebene nach Fig. 2 senkrechten Schnittebene, in vereinfachter Darstellung.

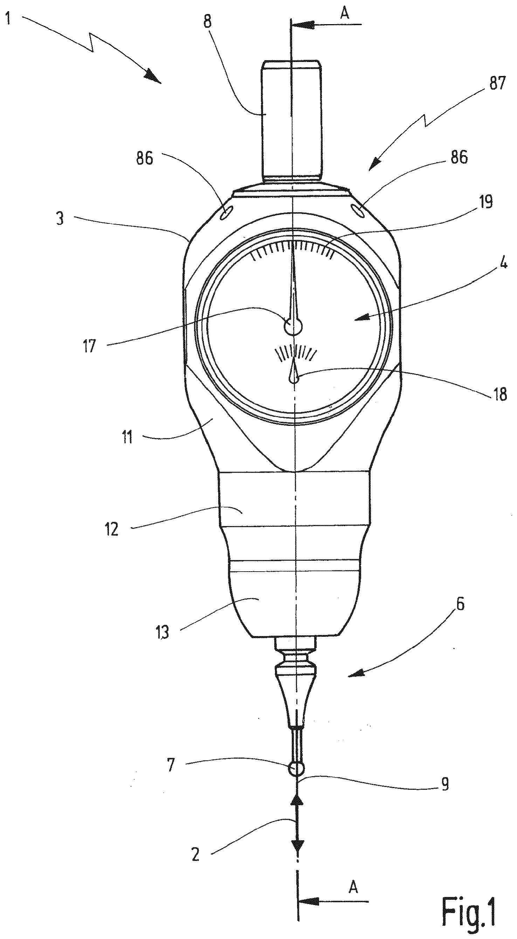

In Fig. 1 ist in vereinfachter Darstellung ein 3D-Tastmessgerät veranschaulicht, das bspw. zur Nullpunkteinstellung einer numerisch gesteuerten Werkzeugmaschine in Bezug auf das zu bearbeitende Werkstück oder für Positionieraufgaben zur Positionierung eines Werkstücks in Bezug auf eine Mess- oder Bearbeitungsmaschine verwendet werden kann. Das Tastmessgerät ermöglicht dabei ein Antasten von Werkstücken sowohl in Längsrichtung des Tastmessgerätes, wie sie in Fig. 1 durch einen Doppelpfeil 2 angedeutet ist, als auch in jeder zu der Längsrichtung 2 senkrechten Richtung.

Wie aus Fig. 1 ersichtlich, weist das 3D-Tastmessgerät 1 ein Gehäuse 3 mit einer im Bereich seiner dem Betrachter zugewandten Gehäuseseite vorgesehenen Anzeigeeinrichtung 4, einen aus dem Gehäuse 3 herausragenden Tastarm 6, der an seinem freien Ende eine kugelförmige Tastspitze 7 zum Antasten eines Werkstücks trägt, und einen an dem zu der Tastspitze 7 entgegengesetzten Längsende des Gehäuses 3 vorgesehenen Einspannschaft 8 zum Einspannen des Tastmessgerätes bspw. in der Werkzeughalterung der Werkzeugmaschine auf. Der Tastarm 6 kann axial, längs der mit der Längsachse 2 des Tastmessgerätes 1 zusammenfallenden Messachse 9 und/oder in beliebiger Radialrichtung, quer zu der Messachse 9 ausgelenkt werden, was eine dreidimensionale Abtastung eines Werkstücks ermöglicht.

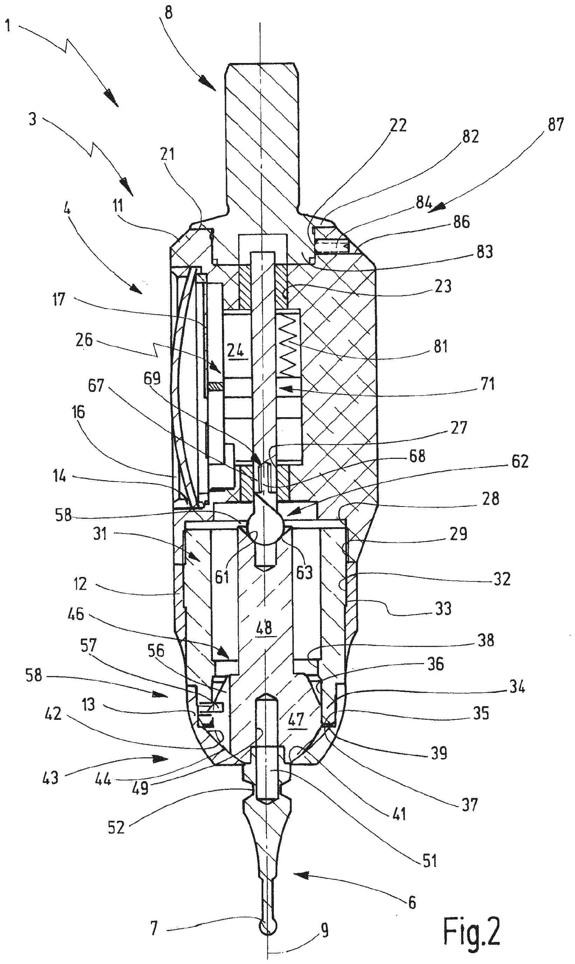

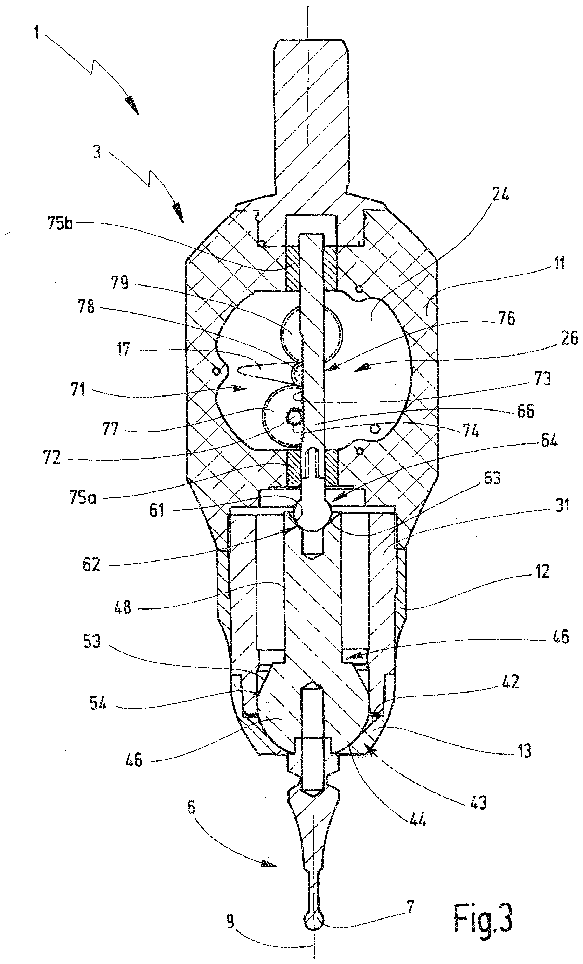

Das in Fig. 1 veranschaulichte 3D-Tastmessgerät ist in größeren Einzelheiten in den Figuren 2 und 3 veranschaulicht, die Längsschnitte durch das Tastmessgerät 1 entlang der in Fig. 1 veranschaulichten Schnittebene A-A (Fig. 2) und entlang einer hierzu senkrechten, die Messachse 9 enthaltenden Schnittebene (Fig. 3) zeigen.

Wie aus den Figuren 2 und 3 ersichtlich, weist das Gehäuse 3 einen mehrteiligen Aufbau mit einem ersten Gehäuseabschnitt 11, in dem die Anzeigeeinrichtung 4 angeordnet ist, einem zweiten Gehäuseabschnitt 12, das sich an den ersten Gehäuseabschnitt 11 anschließt, und einem Gehäusedeckel 13 auf, der das Gehäuse 3 an dem der Tastspitze zugewandten vorderen Stirnende des Gehäuses 3 abschließt.

Der erste Gehäuseabschnitt 11 weist eine fensterartige Öffnung 14 auf, in der die von außen ablesbare Anzeigeeinrichtung 4 angeordnet ist. Die Öffnung 14 ist durch eine durchsichtige, z.B. aus Glas oder Kunststoff bestehende Abdeckplatte 16 nach außen verschlossen.

Die Anzeigeeinrichtung 4 ist hier als analoge Anzeige wenigstens mit einem in etwa in der Mitte des Anzeigefeldes drehbar gelagerten Hauptzeiger 17, gegebenenfalls einem Hilfs- oder Präzisionszeiger 18 und einer hier lediglich angedeuteten Strichskala 19, der gegebenenfalls hier nicht näher dargestellte Ziffern zugeordnet sind, ausgebildet. Es könnte aber auch eine numerische Anzeige oder eine grafische Anzeige vorgesehen sein.

Im Übrigen weist der erste Gehäuseabschnitt an seinem von der Tastspitze 7 abgewandten Stirnende eine ebene Stirnfläche 21 auf, in der eine zu der Längsachse 2 zentrische Bohrung 22 vorgesehen ist. Die Bohrung 22 ist über eine Durchgangsöffnung 23 mit einem Innenraum 24 des ersten Gehäuseabschnitts 11 verbunden, in dem eine Messeinrichtung 26 des Tastmessgerätes 1 angeordnet ist. Die Messeinrichtung 26 ist in größeren Einzelheiten nachstehend beschrieben.

Der Innenraum 24 ist über eine weitere Durchgangsöffnung 27 mit einer vorderen Stirnöffnung 28 an dem der Tastspitze 7 zugewandten Stirnende des ersten Gehäuseabschnitts 11 verbunden, die gestuft ausgebildet ist und an ihrem äußeren zylindrischen Abschnitt ein Innengewinde 29 trägt. Die Stirnöffnung 28 und das Innengewinde 29 sind zur Aufnahme einer Führungshülse 31 eingerichtet, die in größeren Einzelheiten nachstehend erläutert ist.

Der zweite Gehäuseabschnitt 12 ist an dem der Tastspitze 7 zugewandten vorderen Stirnende des ersten Gehäuseabschnitts 11 angeordnet und im Wesentlichen als zylindrische Hülse ausgebildet. Er dient zur Sicherung der Führungshülse 31 an dem ersten Gehäuseabschnitt 11 und weist hierzu ein Innengewinde 32 zum Aufschrauben auf die Führungshülse 31 auf.

Die Führungshülse 31 ist im Wesentlichen zylindrisch ausgebildet und sitzt in der Stirnöffnung 28 des ersten Gehäuseabschnitts 11. Sie weist an ihrem der Stirnöffnung 28 benachbarten Ende ihrer Außenfläche ein Außengewinde 33 auf, das in das Innengewinde 29 der Stirnöffnung 28 eingeschraubt und ferner mit dem Innengewinde 32 des zweiten Gehäuseabschnitts verschraubt ist. Die Führungshülse 31 weist einen der Tastspitze 7 zugewandten vorderen Abschnitt 34 mit reduziertem Außendurchmesser auf, der ein weiteres Außengewinde 35 zum Verschrauben mit dem Gehäusedeckel 13 trägt.

Die im Wesentlichen zylindrische Innenfläche 36 der Führungshülse weist im Abstand zu ihrer vorderen, der Tastspitze zugewandten Stirnseite 37 eine nach innen vorspringende ringförmige Verengung 38 auf.

Der Gehäusedeckel 13 ist im Wesentlichen schalenförmig ausgebildet und weist an seinem dem zweiten Gehäuseabschnitt 12 zugewandten Ende ein Innengewinde 39 auf, das passend zu dem Außengewinde 34 der Führungshülse 31 ausgebildet und auf dieses aufgeschraubt ist. In der der Tastspitze 7 zugewandten Stirnseite des Gehäusedeckels 13 ist ein Durchgangsloch 41 vorgesehen, durch das der Tastarm 6 nach außen ragt.

Eine Innenfläche 42 zwischen dem Durchgangsloch 41 und dem Innengewindeabschnitt 39 weist eine um die Messachse 9 herum rotationssymmetrische kegelstumpfförmige Gestalt mit geradliniger Erzeugenden auf und dient als innere Steuerfläche eines ersten Universalgelenks 43 zur Verschwenkung des Tastarms 6 relativ zu der Messachse 9. Die innere Steuerfläche 42 wirkt mit einer äußeren Steuerfläche 44 des ersten Universalgelenks 43 zusammen, die an einem Tasthebel 46 vorgesehen ist.

Der Tasthebel 46 weist eine längliche Gestalt mit einem kugeligen Gelenkkopf 47 und einem sich von diesem aus erstreckenden Bolzenabschnitt 48 auf. Der Tasthebel 46 ist in der in den Figuren dargestellten Ruhestellung mit seiner Längserstreckung von dem Gelenkkopf 47 über den Bolzenabschnitt 48 hinweg zentrisch zu der Messachse 9 angeordnet.

Der Gelenkkopf 47 weist an der dem Tastarm 6 zugewandten Seite eine zu der Messachse 9 rotationssymmetrische konvexe, kugelige Gestalt mit einer kreisabschnittförmigen Erzeugenden auf, die die äußere Steuerfläche 44 des ersten Universalgelenks 43 definiert, die in der kegelstumpfförmigen Innenfläche 42 des Gehäusedeckels 13 allseits drehbar abgestützt ist.

In der kugeligen Außenfläche 44 des Tasthebels 46 ist stirnseitig eine Sackbohrung 49 ausgebildet, in die ein Abschnitt einer Madenschraube 51 eingeschraubt ist, deren anderer Abschnitt über die Stirnseite des Gelenkkopfs 47 hinaus ragt und den Tastarm 6 trägt. Der Tastarm ist auf dem herausragenden Abschnitt der Madenschraube 51 aufgeschraubt.

Der Tastarm 6 weist eine längliche, nadelförmige Gestalt ausgehend von dem stirnseitigen Ende des Gelenkkopfes 47 bis zu der kugelförmigen Tastspitze 7 auf und ist in der dargestellten Ruhestellung zu der Messachse 9 zentrisch angeordnet. In der Nähe des vorderen Endes der Madenschraube 51 weist der Tastarm 6 eine lokale Einschnürung 52 auf, die einen dünnwandigen Bereich definiert, der eine Sollbruchstelle für den Fall unzulässiger, insbesondere radialer Belastungen darstellt.

Erneut bezugnehmend auf den Tasthebel 46 ist aus den Figuren 2 und 3 ersichtlich, dass der Gelenkkopf 47 im Anschluss an die kugelige äußere Steuerfläche 44 einen sich in Richtung von dem Tastarm 6 weg verjüngenden Abschnitt 53 aufweist, der zu der Messachse 9 rotationssymmetrisch, kegelstumpfförmig mit geradliniger Erzeugenden ausgebildet ist. An dem Übergang zwischen der kugeligen Steuerfläche 44 und dem kegelstumpfförmigen Abschnitt 53, an einer Stelle, an der die Tangente an der Steuerfläche 44 im Wesentlichen parallel zu der Messachse 9 verläuft, ist eine schmale ringförmige, im Querprofil im Wesentlichen punktförmige Lagerstelle 54 des Gelenkkopfs 47 ausgebildet, die mit der Innenfläche 36 der Führungshülse 31 in Kontakt steht und durch diese bei einer Axialverschiebung des Tasthebels 46 längs der Messachse 9 geführt wird.

Außerdem weist der Gelenkkopf 47 an seiner Außenfläche einen zu der Messachse 9 im Wesentlichen parallel verlaufenden Längsschlitz 56 auf, in den ein an der Führungshülse 31 befestigter, radial nach innen ragender Stift 57 eingreift (Fig. 2), um gemeinsam mit dem Längsschlitz 56 eine Verdrehsicherungseinrichtung 58 für den Tasthebel 46, die dessen Verdrehung um die Messachse 9 verhindert, zu bilden.

Der kegelstumpfförmige Abschnitt 53 geht über eine Stufe in den bolzenförmigen Abschnitt 48 über, der sich bis in die Stirnöffnung 28 des ersten Gehäuseabschnitts 11 hinein erstreckt. In der dem ersten Gehäuseabschnitt 11 zugewandten Stirnfläche 59 des Tasthebels 46 ist eine um die Messachse 9 herum rotationssymmetrische, sich nach außen, zu dem ersten Gehäuseabschnitt 11 hin erweiternde Konusfläche 61 mit einer hier geradlinigen Erzeugenden ausgebildet, die eine innere Steuerfläche eines zweiten Universalgelenks 62 des Tastmessgerätes 1 bildet. Die Konusfläche 61 ist auf einer kugeligen äußeren Steuerfläche 63 des zweiten Universalgelenks 62 schwenkbar abgestützt, die an einem Koppelelement 64 ausgebildet ist.

Das Koppelelement 64 koppelt den Tasthebel 46 wirksam mit der Messeinrichtung 26 um eine Verschwenkung des Tasthebels 46 in eine lineare axiale Bewegung einer Zahnstange 66 der Messeinrichtung 26 umzusetzen. Das Koppelelement 64 kann unmittelbar an einem dem Tasthebel 46 zugewandten Stirnende 67 der Zahnstange 66 angeformt, also integral mit dieser ausgebildet sein. In der in den Figuren dargestellten Ausführungsform ist das Koppelelement 64 jedoch ein von der Zahnstange 66 gesondertes Bauteil. Es weist im Anschluss an die kugelige Außenfläche 63 einen zapfenförmigen Fortsatz 68 auf, der über eine Schraubverbindung 69 stirnseitig mit dem Stirnende 67 der Zahnstange 66 lösbar verbunden ist.

Die Messeinrichtung 26 ist hier als mechanische Messuhr ausgebildet und weist ein Zahnradgetriebe 71 auf, zu dem die Zahnstange 66 und ein mit dieser kämmendes Zahnstangenritzel 72 gehören. Die Zahnstange 66 weist in einem Umfangsabschnitt ihrer ansonsten zylindrischen Außenfläche eine längs ihrer Erstreckung verlaufende Verzahnung 73 auf, die mit einer an dem Zahnstangenritzel 72 vorgesehenen Stirnverzahnung 74 in Eingriff steht. Es kann auch eine Schrägverzahnung an dem Zahnstangentrieb 66, 72 vorgesehen sein.

Die Zahnstange 66 ist in axialen Gleitlagern 75a, 75b axial verschiebbar gelagert und geführt, die im Abstand zueinander längs der Messachse 9, hier insbesondere in den Durchgangsöffnungen 23, 27 des ersten Gehäuseabschnitts 11 vorgesehen sind.

Prinzipiell könnte der in Fig. 1 veranschaulichte Zeiger 17 der Anzeigeeinrichtung 4 unmittelbar mit dem Zahnstangenritzel 72 verbunden sein. Im vorliegenden Fall ist jedoch eine zusätzliche Übersetzungsstufe mit einem Räderwerk 76 vorgesehen, um einen kleinen linearen Schiebeweg der Zahnstange 66 in einen relativ großen Drehausschlag des Zeigers 17 umzuwandeln. Das Räderwerk 76 weist hierzu ein mit dem Zahnstangenritzel 72 drehfestes und koaxiales Übertragungsritzel 77 auf, das über eine Stirnverzahnung mit einem Zeigerritzel 78 kämmend in Eingriff steht, das mit dem Zeiger 17 drehfest verbunden ist. Optional kann ein weiteres Zahnrad 79 zum Ausgleich von Spielen in dem Zahnradgetriebe 71 vorgesehen sein. Dem Zahnrad 79 kann auch eine hier nicht näher dargestellte Spielausgleichsfeder zugeordnet sein, die auch die Funktion erfüllen kann, die Zahnstange 66 nach außen in Richtung auf den Tasthebel 46 bzw. die Tastspitze 7 vorzuspannen. Hierzu ist aber vorzugsweise eine gesonderte Feder 81 vorgesehen, wie sie in Fig. 2 lediglich schematisiert dargestellt ist und die sich bspw. einerseits an dem Gehäuse 3 und andererseits an der Zahnstange 66 derart abstützt, dass die Zahnstange 66 nach außen in Richtung auf die Tastspitze 7 gedrückt wird.

An dem von der Tastspitze 7 abgewandten Ende des Gehäuses 3 ist der Einspannschaft 8 angeordnet, der einen radialen Flansch 82 und einen axialen Fortsatz 83 aufweist. Der radiale Flansch 82 liegt auf der ebenen äußeren Stirnfläche 21 des Gehäuses 3 an, während der axiale Fortsatz 83 in die in dem Gehäuseende vorgesehene Bohrung 22 eingreift. Dabei ist der Durchmesser der zylindrischen Außenfläche des axialen Fortsatzes 83 geringfügig kleiner als der Innendurchmesser der Bohrung 22, so dass der axiale Fortsatz 83 mit geringem radialen Spiel in der Bohrung 22 aufgenommen ist. Drei oder mehrere Schrauben 84, von denen lediglich eine in Fig. 2 angedeutet ist, sind in jeweilige radiale Gewindebohrungen 86 eingeschraubt, die um den Umfang des Gehäuseabschnitts 11 herum verteilt angeordnet sind und durch diesen bis zu der Innenfläche der Bohrung 22 hindurchführen. Mittels der Schrauben 84 lässt sich der Einspannschaft 8 in der gewünschten radialen Lage justieren und derart fixieren, dass die Montageachse des Einspannschaftes, die mit der Maschinenspindelachse übereinstimmt, mit der Messachse 9 des Tastmessgerätes zusammenfällt. Damit ist eine Justage- und Zentriervorrichtung 86 für das Tastmessgerät 1 geschaffen.

Das soweit beschriebene erfindungsgemäße 3D-Tastmessgerät 1 funktioniert wie folgt:
Im Betrieb wird das Tastmessgerät 1 z.B. zur Nullpunkteinstellung einer bspw. numerisch gesteuerten Bearbeitungsmaschine bezüglich eines zu bearbeitenden Werkstücks verwendet. Hierzu wird das Tastmessgerät 1 mit dem Einspannschaft 8 in die Maschinenspindel eingespannt und mittels der Justage- und Zentriervorrichtung 86 genau ausgerichtet. In dem in den Figuren dargestellten, nicht ausgelenkten Ausgangs- oder Ruhezustand sind die wesentlichen Komponenten des Tastmessgerätes 1, insbesondere der Tastarm 6 mit der Tastspitze 7, der Tasthebel 46 mit dem Kugelgelenkkopf 47 und dem Bolzenabschnitt 48, das Koppelelement 64 und die Zahnstange 66 der Messeinrichtung 26 alle mit ihren Längsausrichtungen längs der und zentrisch zu der Messachse 9 angeordnet, die mit der Längsachse (quasi Symmetrieachse) des Tastmessgerätes 1 zusammenfällt. Durch die zentrische Anordnung dieser Komponenten weist das erfindungsgemäße Tastmessgerät 1 in Radialrichtung eine äußerst geringe Störkontur und schlanke Form auf. Das System zur Umsetzung der Auslenkung des Tastarms 6 in die Verschiebung der Zahnstange 66 verwendet nur wenige und relativ einfach aufgebaute Komponenten, die einen robusten, zuverlässigen Aufbau und eine hohe Funktionssicherheit ergeben.

Wird ein Werkstück mit der Tastspitze 7 axial angetastet, wird die Anordnung aus dem Tastarm 7, dem Tasthebel 46, dem Koppelelement 64 und der Zahnstange 66 gegen die Wirkung der Vorspannkraft der Feder 81 axial längs der Messachse 9 weiter ins Innere des Gehäuses 3, in Richtung auf den Einspannschaft 8 eingedrückt. Dabei wird der Gelenkkopf 47 bei seiner Axialbewegung an der punktförmigen Lagerstelle 54 durch die zylindrische Innenfläche 36 der Führungshülse 31 reibungsarm geführt, während die Zahnstange 66 durch die Gleitlager 75a, 75b präzise geführt wird. Die axiale Verschiebung des Tastarms 6 wird über die Getriebeeinrichtung 71 der Messeinrichtung 26 in eine Drehbewegung des Zeigers 17 umgesetzt, deren Größe über die Anzeige 4 von außen abgelesen werden kann.

Wird ein Werkstück mit der Tastspitze 7 quer zu der Messachse 9 angetastet, schwenkt der Gelenkkopf 47 mit dem daran befestigten Tastarm 6 um einen durch das erste Universalgelenk 43 definierten Schwenkpunkt, der im Wesentlichen auf der Messachse 9 im Bereich des kugeligen Gelenkkopfs 47 liegt. Dadurch wird das von dem Gelenkkopf 47 ferne Stirnende 59 mit der Konusfläche 61 mit verschwenkt. Die konusförmige innere Steuerfläche 61 gleitet dabei an der kugeligen äußeren Steuerfläche 63 des Koppelelementes 64 und wirkt auf diese axial derart ein, dass die Schwenkbewegung des Tasthebels 46 in eine axiale Bewegung des Koppelelementes 64 und der durch dieses mitgenommenen Zahnstange 66 umgesetzt wird. Die axiale Verschiebung der Zahnstange 66 wird wiederum mit der Messeinrichtung 26 gemessen, indem sie über das Zahnradgetriebe 71 in eine Verdrehung des Zeigers 17 der Anzeigeeinrichtung 4 umgesetzt wird. Durch die erläuterte Gestaltung der inneren und äußeren Steuerflächen 42, 44 und 61, 63 des ersten bzw. zweiten Universalgelenks 43, 62 mit passend gewählten Radien und Konuswinkeln kann erreicht werden, dass die radiale Auslenkung der Tastspitze 7 in einem linearen proportionalen 1:1-Verhältnis in den durch die Schwenkbewegung des Tasthebels 46 bewirkten axialen Stellhub der Zahnstange 66 umgesetzt wird. In anderen Worten stimmt der Ausschlag des Zeigers 17 bei einer axialen Verschiebung der Tastspitze 7 um einen vorbestimmten Weg mit der Auslenkung des Zeigers bei einer Verschwenkung der Tastspitze quer zu der Messachse 9 um den gleichen Weg überein.

Der aus dem Gehäuse 3 vorstehende Tastarm 6 kann im Messbetrieb bei Unachtsamkeit durch Aufprall gegen Hindernisse Stoßbelastungen ausgesetzt werden, die über die Wirkkomponenten des Tastmessgerätes 1 auf die Messeinrichtung 26 übertragen und diese beschädigen können. Um dies zu vermeiden, sind an dem erfindungsgemäßen Tastmessgerät 1 eine Reihe von Sicherheitsmerkmalen vorgesehen, die einen Schaden verhindern oder zumindest begrenzen können. Bspw. dient die zylindrische Innenfläche der Führungshülse 31 als seitlicher Anschlag bei Querbelastungen, während die Verengung 38 in der Innenfläche 36 einen Axialanschlag bildet, der den maximalen Axialhub des Tasthebels 46 in der Führungshülse 31 begrenzt. Ferner kann bei Querbelastungen, die eine Verschwenkung des Tasthebels zur Folge haben, die Konusfläche 61 des Tasthebels 46 mit der kugeligen Außenfläche 63 des Koppelelementes 64 außer Eingriff gelangen, so dass die kugelige Außenfläche 63 auf die Stirnfläche 59 außerhalb der Konusfläche herausgedrückt wird. Der durch die Zahnstange 66 dabei vollführte Axialhub erreicht die Messbereichsgrenze der Messeinrichtung 26 dabei nicht. Schließlich sorgt die an dem Tastarm 6 vorgesehene lokale Einschnürung 52 für einen kontrollierten Sollbruch, wenn eine auf den Tastarm 6 einwirkende Belastung eine vorbestimmte Belastungsgrenze überschreitet.

Im Rahmen der Erfindung sind zahlreiche Modifikationen möglich. So kann bspw. anstelle der analogen Zeigeranzeige 4 auch eine numerische Anzeige vorgesehen sein, wobei dann die axiale Verschiebung der Zahnstange bzw. einer sonstigen Messstange geeignet erfasst und in eine Zifferausgabe umgesetzt wird. Zur Erfassung der Axialverschiebung der Zahn- bzw. Messstange kann auch ein berührungsloses Messsystem auf kapazitiver oder induktiver Basis dienen. Das Tastmessgerät 1 und das Gehäuse 3 können prinzipiell unterschiedliche Formen einnehmen, wobei jedoch die zentrische Anordnung des Tastarms 6, des Tasthebels 46 und der Zahnstange 66 bzw. einer sonstigen Messstange der Messeinrichtung in der Messachse 9 von erheblicher Bedeutung ist, weil sie die Grundlage für einen kompakten, einfachen und robusten Aufbau mit geringem Bauvolumen und geringer Bauteileanzahl sowie für eine lange und funktionssichere Nutzung schafft.

Ein 3D-Tastmessgerät, insbesondere zum Antasten von Werkstücken zur Nullpunkteinstellung einer numerisch gesteuerten Werkzeugmaschine, weist ein längliches Gehäuse 3, einen aus dem Gehäuse 3 herausragenden und eine Tastspitze 7 tragenden Tastarm 6, der relativ zu dem Gehäuse 3 in Richtung einer Messachse 9 verschiebbar und um die Messachse 9 allseitig schwenkbar ist, einen mit dem Tastarm 6 fest verbundenen Tasthebel 46, der an seinem dem Tastarm 6 zugewandten Ende mittels eines ersten Universalgelenks 43 an dem Gehäuse 3 drehbar abgestützt ist und der an seinem von dem Tastarm 6 abgewandten Ende über ein zweites Universalgelenk 62 drehbar abgestützt ist, und eine Messeinrichtung 26 zur Erfassung einer die Verschiebung und/oder Verschwenkung des Tastarms 6 kennzeichnenden Größe auf, wobei die Messeinrichtung 26 ein Zahnradgetriebe 71 mit einer länglichen Zahnstange 66 aufweist, die längs der Messachse 9 ausgerichtet und verschiebbar gelagert ist und die über das zweite Universalgelenk 62 mit dem Tasthebel 46 gekoppelt ist. Der Tastarm 9, der Tasthebel 46 und die Zahnstange 66 sind im nicht verschwenkten Ruhezustand des Tastarms 6 alle zu der Messachse 9 zentrisch angeordnet. Das Tastmessgerät 1 weist einen einfachen, robusten und kompakten Aufbau auf.

## Patentansprüche

1. 3D-Tastmessgerät, insbesondere zum Antasten von Werkstücken in Werkzeugmaschinen, das aufweist:
ein Gehäuse (3);
einen aus dem Gehäuse (3) herausragenden und eine Tastspitze (7) tragenden Tastarm (6), der relativ zu dem Gehäuse (3) in Richtung einer Messachse (9) verschiebbar und mittels eines ersten Universalgelenks (43) um die Messachse (9) allseitig schwenkbar ist;
einen mit dem Tastarm (6) verbundenen Tasthebel (46), an dessen dem Tastarm (6) zugewandten Ende ein Gelenkkopf (47) ausgebildet ist, der eine äußere Steuerfläche (44) aufweist, die an einer inneren Steuerfläche des Gehäuses (3) drehbar abgestützt ist, um das erste Universalgelenk (43) zur Verschwenkung des Tastarms (6) zu bilden, wobei der Tasthebel (46) an seinem von dem Tastarm (6) abgewandten Ende (59) eine weitere Steuerfläche (61) für ein zweites Universalgelenk (62) aufweist; und
eine Messeinrichtung (26) zur Erfassung einer die Verschiebung und/oder Verschwenkung des Tastarms (6) kennzeichnenden Größe, wobei die Messeinrichtung (26) eine längliche Zahnstange (66) eines Zahnradgetriebes (71) aufweist, die längs der Messachse (9) ausgerichtet, verschiebbar gelagert und über das zweite Universalgelenk (62) mit dem Tasthebel (46) gekoppelt ist,
wobei die Zahnstange (66) ein mit ihr gemeinsam verschiebbares Koppelelement (64) trägt, das ein von der Zahnstange (66) gesondertes Bauteil ist, das an einem Stirnende (67) der Zahnstange (66) lösbar angebracht ist, oder das an der Zahnstange (66) integral ausgebildet ist, wobei das Koppelelement (64) eine mit der weiteren Steuerfläche (61) zusammenwirkende Steuerfläche (63) des zweiten Universalgelenks (62) aufweist, um den Tasthebel (46) mit der Zahnstange (66) zu koppeln, und
wobei der Tastarm (6), der Tasthebel (46) und die Zahnstange (66) mit dem Koppelelement (64) im Ruhezustand zu der Messachse (9) zentrisch angeordnet sind.

2. 3D-Tastmessgerät nach Anspruch 1, **dadurch gekennzeichnet, dass** der Tastarm (6), der Tasthebel (46) und die Zahnstange (66) im Ruhezustand in und mit ihrer Längsausrichtung längs der Messachse (9) hintereinander angeordnet und unter Vernachlässigung einer Verzahnung (73) der Zahnstange (66) zu der Messachse (9) rotationssymmetrisch ausgebildet sind.

3. 3D-Tastmessgerät nach Anspruch 1 oder 2, **dadurch gekennzeichnet, dass** das Gehäuse (3) mehrteilig ausgebildet ist und wenigstens einen ersten Gehäuseabschnitt (11), der die Messeinrichtung (26) und eine Anzeigeeinrichtung (4) zur Anzeige der durch die Messeinrichtung erfassten Größen aufnimmt, einen Gehäusedeckel (13), der an einem der Tastspitze (7) benachbarten Endbereich des Tastmessgerätes (1) vorzugsweise durch Anschrauben lösbar befestigt ist, und einen zwischen dem ersten Gehäuseabschnitt (11) und dem Gehäusedeckel (13) angeordneten zweiten Gehäuseabschnitt (12) aufweist, der eine Führungshülse (31) zur längsverschiebbaren Führung des Tasthebels (46) entlang der Messachse (9) aufnimmt.

4. 3D-Tastmessgerät nach Anspruch 3, **dadurch gekennzeichnet, dass** die Führungshülse (31) eine zylindrische Innenfläche (36) zur axialen Führung des Tasthebels (46) und eine Verengung (48) in der Innenfläche (36) aufweist, die einen Endanschlag zur Begrenzung der axialen Bewegung des Tasthebels (46) in der Führungshülse (31) bildet.

5. 3D-Tastmessgerät nach einem der vorhergehenden Ansprüche, **dadurch gekennzeichnet, dass** die innere Steuerfläche (42) des ersten Universalgelenks (43) eine um die Messachse (9) herum rotationssymmetrische kegelstumpfförmige Gestalt mit geradliniger Erzeugenden aufweist und die äußere Steuerfläche (44) des ersten Universalgelenks (43) eine zu der Messachse (9) rotationssymmetrische konvexe Gestalt mit einer kreisabschnittförmigen Erzeugenden aufweist.

6. 3D-Tastmessgerät nach einem der Ansprüche 3 bis 5, **dadurch gekennzeichnet, dass** der Gehäusedeckel (13) die innere Steuerfläche (42) des ersten Universalgelenks (43) trägt und einen Teil einer auswechselbaren Baueinheit bildet, die den Tastarm (6), den Tasthebel (46) und die Führungshülse (31) zur längsverschiebbaren Führung des Tasthebels (46) entlang der Messachse (9) aufweist.

7. 3D-Tastmessgerät nach einem der vorhergehenden Ansprüche, **dadurch gekennzeichnet, dass** der Tastarm (6) an dem Tasthebel (46) auswechselbar gehalten, vorzugsweise angeschraubt ist.

8. 3D-Tastmessgerät nach einem der vorhergehenden Ansprüche, **dadurch gekennzeichnet, dass** der Tastarm (6) eine Einschnürung (52) als Überlastungsschutz gegen übermäßige Stoßbelastungen aufweist.

9. 3D-Tastmessgerät nach einem der vorhergehenden Ansprüche, **dadurch gekennzeichnet, dass** der Tasthebel (46) einen Gelenkkopf (47) mit einem wenigstens abschnittsweise kugeligen Bereich (44), der sich um eine zu der Messachse (9) senkrechte Achse über einen Winkel von etwa 180° erstreckt, und einen sich an den kugeligen Bereich (44) anschließenden verjüngenden Bereich (53) aufweist.

10. 3D-Tastmessgerät nach einem der vorhergehenden Ansprüche, **dadurch gekennzeichnet, dass** der Tasthebel (46) in seiner zu dem kugeligen Gelenkkopf (47) entgegengesetzten Stirnfläche (59) eine um die Messachse (9) herum rotationssymmetrische, sich zu der Zahnstange (66) hin erweiternde Konusfläche (61) mit einer im Wesentlichen geradlinigen Erzeugenden aufweist, die eine innere Steuerfläche des zweiten Universalgelenks (62) bildet, die mit einer vorzugsweise kugeligen äußeren Steuerfläche (63) des zweiten Universalgelenks (62) zusammenwirkt.

11. 3D-Tastmessgerät nach einem der vorhergehenden Ansprüche, **dadurch gekennzeichnet, dass** das Koppelelement (64) ein kugeliges Ende (63) aufweist, das die mit der weiteren Steuerfläche (61) zusammenwirkende Steuerfläche (63) des zweiten Universalgelenks (62) definiert.

12. 3D-Tastmessgerät nach einem der vorhergehenden Ansprüche, **dadurch gekennzeichnet, dass** das Zahnradgetriebe (71) wenigstens ein Zahnstangenritzel (72), das mit der Zahnstange (66) kämmt, und ein Übertragungsräderwerk (76) aufweist, das die Drehung des Zahnstangenritzels (72) in eine Drehbewegung eines Zeigers (17) einer Anzeigeeinrichtung (4) zur Anzeige der durch die Messeinrichtung (26) erfassten Größe wandelt.

13. 3D-Tastmessgerät nach einem der vorhergehenden Ansprüche, **dadurch gekennzeichnet, dass** die Zahnstange (66) durch Gleitlager (75a, 75b) längs der Messachse (9) gleitend geführt ist und einen durch das zweite Universalgelenk (62) vorgegebenen maximalen axialen Verschiebeweg aufweist, der kleiner ist als die maximale Hubweite der Zahnstange (66).

## Claims

1. A 3D probe measuring instrument, in particular for probing work pieces in machine tools, comprising:
a housing (3);
a probe arm (6) protruding from the housing (3) and carrying a probe tip (7), the probe arm (6) being displaceable relative to the housing (3) in the direction of a measuring axis (9) and pivotable to all sides around the measuring axis (9) by means of a first universal joint (43);
a probe lever (46) connected to the probe arm (6) and having a joint head (47) which is formed at its end facing the probe arm (6) and has an outer control surface (44) which is rotatably supported on an inner control surface of the housing (3) to form the first universal joint (43) for pivoting the probe arm (6), wherein the probe lever (46) has at its end (59) facing away from the probe arm (6) a further control surface (61) for a second universal joint (62); and
a measuring device (26) for detecting a value characterizing the displacement and/or pivoting of the probe arm (6), wherein the measuring device (26) comprises an elongated toothed rack (66) of a gear mechanism (71) which is oriented along the measuring axis (9), slideably mounted and coupled to the probe lever (46) via the second universal joint (62),
wherein the toothed rack (66) carries a coupling element (64) which is displaceable together therewith, wherein the coupling element (64) is a separate component from the toothed rack (66), which is detachably mounted on a front end (67) of a toothed rack (66), or is integrally formed on the toothed rack (66), wherein the coupling element (64) has a control surface (63) of the second universal joint (62) which cooperates with the further control surface (61) in order to couple the probe lever (46) to the toothed rack (66), and
wherein the probe arm (6), the probe lever (46) and the toothed rack (66) are arranged centrally to the measuring axis (9) in the rest state.

2. The 3D probe measuring instrument according to claim 1, **characterized in that** the probe arm (6), the probe lever (46) and the toothed rack (66) are arranged in and with their longitudinal alignment one behind the other along the measuring axis (9) in the rest state and, disregarding a toothing (73) of the toothed rack (66), are designed to be rotationally symmetrical with respect to the measuring axis (9) .

3. The 3D probe measuring instrument according to claim 1 or 2, **characterized in that** the housing (3) is of multi-part construction and comprises at least a first housing section (11), which receives the measuring device (26) and a display device (4) for displaying the values detected by the measuring device, a housing cover (13), which is detachably attached at an end region of the probe measuring instrument (1) adjacent to the probe tip (7), preferably by screwing, and a second housing section (12) which is arranged between the first housing section (11) and the housing cover (13) and receives a guide sleeve (31) for longitudinally displaceable guiding of the probe lever (46) along the measuring axis (9).

4. The 3D probe measuring instrument according to claim 3, **characterized in that** the guide sleeve (31) has a cylindrical inner surface (36) for axial guiding of the probe lever (46) and a constriction (48) in the inner surface (36), which forms an end stop to limit the axial movement of the probe lever (46) in the guide sleeve (31).

5. The 3D probe measuring instrument according to anyone of the preceding claims, **characterized in that** the inner control surface (42) of the first universal joint (43) has a frustoconical shape which is rotationally symmetrical about the measuring axis (9) and has a rectilinear generatrix and the outer control surface (44) of the first universal joint (43) has a convex shape which is rotationally symmetrical to the measuring axis (9) and has a generatrix in the form of a circular segment.

6. The 3D probe measuring instrument according to anyone of the claims 3 through 5, **characterized in that** the housing cover (13) carries the inner control surface (42) of the first universal joint (43) and forms a part of an exchangeable component which comprises the probe arm (6), the probe lever (46) and the guide sleeve (31) for longitudinally displaceable guiding of the probe lever (46) along the measuring axis (9).

7. The 3D probe measuring instrument according to anyone of the preceding claims, **characterized in that** the probe arm (6) is retained interchangeably, preferably screwed, on the probe lever (46).

8. The 3D probe measuring instrument according to anyone of the preceding claims, **characterized in that** the probe arm (6) has a narrowing (52) as overload protection against excessive shock loads.

9. The 3D probe measuring instrument according to anyone of the preceding claims, **characterized in that** the probe lever (46) comprises a joint head (47) having a spherical area (44) at least in sections, which extends over an angle of approximately 180° around an axis perpendicular to the measuring axis (9), and a tapering area (53) adjoining the spherical area (44).

10. The 3D probe measuring instrument according to anyone of the preceding claims, **characterized in that** the probe lever (46) comprises, in its end face (59) opposite to the spherical joint head (47), a conical surface (61) having a substantially rectilinear generatrix, wherein the conical surface (61) is rotationally symmetrical about the measuring axis (9) and widens towards the toothed rack (66) and forms an inner control surface of the second universal joint (62) which cooperates with a preferably spherical outer control surface (63) of the second universal joint (62).

11. The 3D probe measuring instrument according to anyone of the preceding claims, **characterized in that** the coupling element (64) has a spherical end (63) which defines the control surface (63) of the second universal joint (62) cooperating with the further control surface (61).

12. The 3D probe measuring instrument according to anyone of the preceding claims, **characterized in that** the gear mechanism (71) comprises at least one rack pinion (72) which measures with the toothed rack (66) and a transmission gear train (76) which transforms the rotation of the rack pinion (72) into a rotary movement of a pointer (17) of a display device (4) for displaying the value detected by the measuring device (26).

13. The 3D probe measuring instrument according to anyone of the preceding claims, **characterized in that** the toothed rack (66) is slidably guided along the measuring axis (9) by sliding bearings (75a, 75b) and has a maximum axial displacement distance which is predetermined by the second universal joint (62) and is smaller than the maximum stroke of the toothed rack (66).

## Revendications

1. Appareil de mesure 3D à palpeur, destiné en particulier au palpage de pièces à usiner dans des machines-outils, qui présente :
un boîtier (3) ;
un bras de palpage (6) dépassant du boîtier (3), qui porte une pointe de palpage (7) et peut être déplacé par rapport au boîtier (3) dans le sens d'un axe de mesure (9) et peut être pivoté vers tous les côtés autour de l'axe de mesure (9), à l'aide d'une première articulation universelle (43) ;
un levier de palpage (46) qui est relié au bras de palpage (6) et dont l'extrémité tournée vers le bras de palpage (6) porte une tête d'articulation (47) qui présente une surface de commande extérieure (44), laquelle est en appui rotatif sur une surface de commande intérieure du boîtier (3), en vue de former la première articulation universelle (43) destinée au pivotement du bras de palpage (6), le levier de palpage (46) présentant, à son extrémité (59) opposée au bras de palpage (6), une surface de commande (61) supplémentaire destinée à une deuxième articulation universelle (62) ; et
un dispositif de mesure (26) destiné à mesurer une grandeur caractérisant la translation et/ou le pivotement du bras de palpage (6), le dispositif de mesure (26) comportant une crémaillère (66) allongée d'une transmission par engrenage (71), qui est orientée le long de l'axe de mesure (9), est montée avec possibilité de translation et est accouplée au levier de palpage (46) par l'intermédiaire de la deuxième articulation universelle (62)
la crémaillère (66) portant un élément d'accouplement (64) qui peut être déplacé avec elle et qui est un élément distinct de la crémaillère (66), lequel est fixé de manière amovible à une extrémité frontale (67) de la crémaillère (66) ou est formé d'une seule pièce avec la crémaillère (66), l'élément d'accouplement (64) présentant une surface de commande (63) de la deuxième articulation universelle (62) qui coopère avec la surface de commande (61) supplémentaire pour accoupler le levier de palpage (46) avec la crémaillère (66), et
le bras de palpage (6), le levier de palpage (46) et la crémaillère (66), avec l'élément d'accouplement (64), étant disposés de manière centrée par rapport à l'axe de mesure (9), à l'état de repos.

2. Appareil de mesure 3D à palpeur selon la revendication 1, **caractérisé en ce que**, à l'état de repos, le bras de palpage (6), le levier de palpage (46) et la crémaillère (66) sont disposés les uns derrière les autres dans le sens de leur longueur et avec leur longueur, le long de l'axe de mesure (9), et, en négligeant une denture (73) de la crémaillère (66), sont réalisés avec symétrie de révolution par rapport à l'axe de mesure (9).

3. Appareil de mesure 3D à palpeur selon la revendication 1 ou 2, **caractérisé en ce que** le boîtier (3) est réalisé en plusieurs parties et comprend au moins une première partie de boîtier (11), qui accueille le dispositif de mesure (26) et un dispositif d'affichage (4) destiné à afficher les grandeurs mesurées par le dispositif de mesure, un couvercle de boîtier (13), qui est fixé de façon amovible, de préférence par vissage, à une zone d'extrémité de l'appareil de mesure à palpeur (1) adjacente à la pointe de palpage (7), et une deuxième partie de boîtier (12) qui est disposée entre la première partie de boîtier (11) et le couvercle de boîtier (13) et qui accueille un manchon de guidage (31) destiné au guidage avec possibilité de déplacement longitudinal du levier de palpage (46), le long de l'axe de mesure (9).

4. Appareil de mesure 3D à palpeur selon la revendication 3, **caractérisé en ce que** le manchon de guidage (31) présente une surface interne (36) cylindrique, destinée au guidage axial du levier de palpage (46), et un rétrécissement dans la surface intérieure (36), qui forme une butée de fin de course destinée à limiter le mouvement axial du levier de palpage (46) dans le manchon de guidage (31).

5. Appareil de mesure 3D à palpeur selon l'une des revendications précédentes, **caractérisé en ce que** la surface de commande intérieure (42) de la première articulation universelle (43) présente une forme tronconique à symétrie de révolution, à génératrice rectiligne, autour de l'axe de mesure (9), et la surface de commande extérieure (44) de la première articulation universelle (43) présente une forme convexe à symétrie de révolution, à génératrice en forme de segment de cercle, par rapport à l'axe de mesure (9).

6. Appareil de mesure 3D à palpeur selon l'une des revendications 3 à 5, **caractérisé en ce que** le couvercle de boîtier (13) porte la surface de commande intérieure (42) de la première articulation universelle (43) et constitue une partie d'un composant interchangeable qui comprend le bras de palpage (6), le levier de palpage (46) et le manchon de guidage (31) destiné au guidage avec possibilité de déplacement longitudinal du levier de palpage (46), le long de l'axe de mesure (9).

7. Appareil de mesure 3D à palpeur selon l'une des revendications précédentes, **caractérisé en ce que** le bras de palpage (6) est fixé de manière échangeable, de préférence vissé, au levier de palpage (46).

8. Appareil de mesure 3D à palpeur selon l'une des revendications précédentes, **caractérisé en ce que** le bras de palpage (6) présente un resserrement (52) en tant que protection contre les surcharges vis-à-vis de charges d'impact excessives.

9. Appareil de mesure 3D à palpeur selon l'une des revendications précédentes, **caractérisé en ce que** le levier de palpage (46) présente une tête articulée (47) avec une partie (44) qui est sphérique au moins par portions et s'étend autour d'un axe perpendiculaire à l'axe de mesure (9), sur un angle d'environ 180 °C, et une partie (53) qui se rétrécit et fait suite à la partie (44) sphérique.

10. Appareil de mesure 3D à palpeur selon l'une des revendications précédentes, **caractérisé en ce que** le levier de palpage (46) présente, dans sa face frontale (59) opposée à la tête d'articulation (47) sphérique, une surface de cône (61) à génératrice sensiblement rectiligne, qui est symétrique de révolution autour de l'axe de mesure (9) et s'élargit en direction de la crémaillère (66) et qui constitue une surface de commande intérieure de la deuxième articulation universelle (62), surface qui coopère avec une surface de commande extérieure (63), de préférence sphérique, de la deuxième articulation universelle (62).

11. Appareil de mesure 3D à palpeur selon l'une des revendications précédentes, **caractérisé en ce que** l'élément d'accouplement (64) présente un extrémité (63) sphérique qui définit la surface de commande (63) de la deuxième articulation universelle (62), qui coopère avec la surface de commande (61) supplémentaire.

12. Appareil de mesure 3D à palpeur selon l'une des revendications précédentes, **caractérisé en ce que** la transmission par engrenage (71) présente au moins un pignon de crémaillère (72), qui engrène avec la crémaillère (66), et un engrenage de transmission (76) qui transforme la rotation du pignon de crémaillère (72) en un mouvement de rotation d'une aiguille (17) d'un dispositif d'affichage (4), en vue d'afficher la grandeur mesurée par le dispositif de mesure (26).

13. Appareil de mesure 3D à palpeur selon l'une des revendications précédentes, **caractérisé en ce que** la crémaillère (66) est guidée de manière coulissante le long de l'axe de mesure (9), à l'aide de paliers lisses (75a, 75b), et présente une course de translation axiale maximale qui est prédéterminée par la deuxième articulation universelle (62) et qui est inférieure à la course maximale de la crémaillère (66).
